# EUROPEAN PATENT APPLICATION

(11) **EP 4 171 117 A1**
(43) Date of publication of application: **26.04.2023**
(21) Application number: 21825948.9
(22) Date of filing: 15.06.2021
(51) Int. Cl.: H04W 36/00

(54) **COMMUNICATION METHOD AND APPARATUS, RELAY DEVICE, AND TERMINAL DEVICE**

(30) Priority: 17.06.2020 CN 202010552800
(71) Applicant: Spreadtrum Communications (Shanghai) Co., Ltd., Shanghai 201203 (CN)
(72) Inventor: LIU, Xing, Shanghai 201203 (CN)
(74) Representative: Pfenning, Meinig & Partner mbB
(86) International application number: PCT/CN2021/100180
(87) International publication number: WO 2021/254345

(57) **Abstract**

The present application provides a communication method, an apparatus, a relay device and a terminal device. The method includes: performing handover of a relay device and a terminal device from a first access network device to a second access network device, and receiving, by the relay device, a data packet sent by the terminal device, where the data packet includes first identification information, and the first identification information is used to identify sending the data packet to the second access network device; and sending, by the relay device, the data packet to the second access network device based on the first identification information. Based on the present application, correct sending of data in a group handover scenario can be realized.

## Description

The present application claims priority to Chinese Patent Application No. 202010552800.X, filed to China National Intellectual Property Administration on June 17, 2020, and entitled "COMMUNICATION METHOD, APPARATUS, RELAY DEVICE AND TERMINAL DEVICE", which is hereby incorporated by reference in its entirety.

### TECHNICAL FIELD

The present application relates to the field of communication technologies and, in particular, to a communication method, an apparatus, a relay device and a terminal device.

### BACKGROUND

There is a difference between thing-to-thing direct communication technology or sidelink communication technology and traditional wireless cellular network communication technology. In a traditional wireless cellular network, a terminal device communicates with a base station. At this time, a link between the terminal device and the base station is called an uplink (uplink, UL) or a downlink (downlink, DL), and an interface is called a Uu interface. In sidelink communication, terminal devices can communicate with each other directly. A link between the terminal devices is called a sidelink (sidelink, SL), and an interface is called a PC5 interface. In a communication network that supports the sidelink, sidelink relay (sidelink relay) may be designed, that is, a link between a relay and a terminal device adopts sidelink technology. In the sidelink relay, both the relay and the terminal device are mobile and may move from a coverage area of a base station to a coverage area of another base station, so a handover process needs to be performed. When there is no relative movement between the relay device and the terminal device, but a movement occurs between the relay and the base station, a handover of the relay device and the terminal device is called a group handover (group handover).

In a group handover scenario based on the sidelink, when the terminal device sends data to the relay, the relay may not know which base station the data is sent to. Therefore, how the relay completes correct sending of data from the terminal device in the group handover scenario is an urgent problem to be solved.

### SUMMARY

The present application provides a communication method, an apparatus, a relay device and a terminal device, for realizing correct sending of data in a group handover scenario.

In a first aspect, an embodiment of the present application provides a communication method, including:
performing handover of a relay device and a terminal device from a first access network device to a second access network device, and receiving, by the relay device, a data packet sent by the terminal device, where the data packet includes first identification information, and the first identification information is used to identify sending the data packet to the second access network device; and sending, by the relay device, the data packet to the second access network device based on the first identification information.

As a possible implementation, the first identification information includes an identification of the relay device under the second access network device and/or an identification of the terminal device under the second access network device;
where the identification of the relay device under the second access network device is different from an identification of the relay device under the first access network device, and/or the identification of the terminal device under the second access network device is different from an identification of the terminal device under the first access network device.

As a possible implementation, the method further includes:
receiving, by the relay device, a first message sent by the terminal device, where the first message includes the identification of the relay device under the second access network device and/or the identification of the terminal device under the second access network device.

As a possible implementation, the first message is a handover command response.

As a possible implementation, the method further includes:
sending, by the relay device, a second message to the terminal device, where the second message includes the identification of the relay device under the second access network device.

As a possible implementation, the second message is a handover command.

As a possible implementation, performing handover of the relay device and the terminal device from the first access network device to the second access network device, and receiving, by the relay device, the data packet sent by the terminal device includes:
performing handover of the relay device and the terminal device from the first access network device to the second access network device, and receiving, by the relay device, a RLC data PDU sent by the terminal device, where the RLC data PDU includes the data packet and the first identification information.

As a possible implementation, a header of the RLC data PDU includes the first identification information.

As a possible implementation, the first identification information is one bit of information in the header of the RLC data PDU.

As a possible implementation, communication between the terminal device and the relay device is performed through a sidelink, and communication between the relay device and the second access network is performed through an uplink and a downlink.

In a second aspect, the present application provides a communication method, including:
performing handover of a relay device and a terminal device from a first access network device to a second access network device, and receiving, by the relay device, a data packet sent by the terminal device; and sending, by the relay device, the data packet to the second access network device based on an identification of the data packet and a boundary data packet identification indicated by a third message; where the boundary data packet identification includes an identification of a last data packet sent by the terminal device to the first access network device, or the boundary data packet identification includes an identification of a first data packet sent by the terminal device to the second access network device.

As a possible implementation, the method further includes:
receiving the third message, where the third message includes the boundary data packet identification.

As a possible implementation, sending, by the relay device, the data packet to the second access network device based on the identification of the data packet and the boundary data packet identification indicated by the third message includes:
sending the data packet to the second access network device if the identification of the data packet is greater than the identification of the last data packet.

As a possible implementation, sending, by the relay device, the data packet to the second access network device based on the identification of the data packet and the boundary data packet identification indicated by the third message includes:
sending the data packet to the second access network device if the identification of the data packet is greater than or equal to the identification of the first data packet.

As a possible implementation, communication between the terminal device and the relay device is performed through a sidelink, and communication between the relay device and the second access network is performed through an uplink and a downlink.

In a third aspect, the present application provides a communication method, including:
performing handover of a relay device and a terminal device from a first access network device to a second access network device, and sending, by the terminal device, a data packet to the relay device, where the data packet includes first identification information, and the first identification information is used to identify sending the data packet to the second access network device.

As a possible implementation, the first identification information includes an identification of the relay device under the second access network device and/or an identification of the terminal device under the second access network device; where the identification of the relay device under the second access network device is different from an identification of the relay device under the first access network device, and/or the identification of the terminal device under the second access network device is different from an identification of the terminal device under the first access network device.

As a possible implementation, the method further includes:
sending, by the terminal device, a first message to the relay device, where the first message includes the identification of the relay device under the second access network device and/or the identification of the terminal device under the second access network device.

As a possible implementation, the first message is a handover command response.

As a possible implementation, the method further includes:
receiving, by the terminal device, a second message sent by the relay device, where the second message includes the identification of the relay device under the second access network device.

As a possible implementation, the second message is a handover command.

As a possible implementation, after performing handover of the relay device and the terminal device from the first access network device to the second access network device, sending, by the terminal device, the data packet to the relay device includes:
after performing handover of the relay device and the terminal device from the first access network device to the second access network device, sending, by the terminal device, a RLC data PDU to the relay device, where the RLC data PDU includes the data packet and the first identification information.

As a possible implementation, a header of the RLC data PDU includes the first identification information.

As a possible implementation, the first identification information is one bit of information in the header of the RLC data PDU.

As a possible implementation, communication between the terminal device and the relay device is performed through a sidelink, and communication between the relay device and the second access network is performed through an uplink and a downlink.

In a fourth aspect, the present application provides a communication method, including:
sending, by a terminal device, a third message to a relay device, where the third message is used to indicate a boundary data packet identification, the boundary data packet identification including an identification of a last data packet sent by the terminal device to a first access network device, or the boundary data packet identification including an identification of a first data packet sent by the terminal device to a second access network device.

In a fifth aspect, the present application provides a communication apparatus, including: a receiving module, a processing module and a sending module;
where the receiving module is configured to perform handover of a relay device and a terminal device from a first access network device to a second access network device, and receive a data packet sent by the terminal device, where the data packet includes first identification information, and the first identification information is used to identify sending the data packet to the second access network device; and the processing module is configured to send the data packet to the second access network device through the sending module based on the first identification information.

As a possible implementation, the first identification information includes an identification of the relay device under the second access network device and/or an identification of the terminal device under the second access network device; where the identification of the relay device under the second access network device is different from an identification of the relay device under the first access network device, and/or the identification of the terminal device under the second access network device is different from an identification of the terminal device under the first access network device.

As a possible implementation, the receiving module is further configured to:
receive a first message sent by the terminal device, where the first message includes the identification of the relay device under the second access network device and/or the identification of the terminal device under the second access network device.

As a possible implementation, the first message is a handover command response.

As a possible implementation, the sending module is further configured to:
send a second message to the terminal device, where the second message includes the identification of the relay device under the second access network device.

As a possible implementation, the second message is a handover command.

As a possible implementation, the receiving module is specifically configured to:
perform handover of the relay device and the terminal device from the first access network device to the second access network device, and receive a RLC data PDU sent by the terminal device, where the RLC data PDU includes the first identification information.

As a possible implementation, a header of the RLC data PDU includes the first identification information.

As a possible implementation, the first identification information is one bit of information in the header of the RLC data PDU.

As a possible implementation, communication between the terminal device and the relay device is performed through a sidelink, and communication between the relay device and the second access network is performed through an uplink and a downlink.

In a sixth aspect, the present application provides a communication apparatus, including: a receiving module, a processing module and a sending module;
where the receiving module is configured to perform handover of a relay device and a terminal device from a first access network device to a second access network device, and receive a data packet sent by the terminal device; and the processing module is configured to send the data packet to the second access network device through the sending module based on an identification of the data packet and a boundary data packet identification indicated by a third message; where the boundary data packet identification includes an identification of a last data packet sent by the terminal device to the first access network device, or the boundary data packet identification includes an identification of a first data packet sent by the terminal device to the second access network device.

As a possible implementation, the receiving module is further configured to:
receive the third message, where the third message includes the boundary data packet identification.

As a possible implementation, the processing module is specifically configured to:
send the data packet to the second access network device through the sending module if the identification of the data packet is greater than the identification of the last data packet.

As a possible implementation, the processing module is specifically configured to:
send the data packet to the second access network device through the sending module if the identification of the data packet is greater than or equal to the identification of the first data packet.

As a possible implementation, communication between the terminal device and the relay device is performed through a sidelink, and communication between the relay device and the second access network is performed through an uplink and a downlink.

In a seventh aspect, the present application provides a communication apparatus, including: a processing module and a sending module;
where the processing module is configured to perform handover of a relay device and a terminal device from a first access network device to a second access network device, and send a data packet to the relay device through the sending module, where the data packet includes first identification information, and the first identification information is used to identify sending the data packet to the second access network device.

As a possible implementation, the first identification information includes an identification of the relay device under the second access network device and/or an identification of the terminal device under the second access network device; where the identification of the relay device under the second access network device is different from an identification of the relay device under the first access network device, and/or the identification of the terminal device under the second access network device is different from an identification of the terminal device under the first access network device.

As a possible implementation, the processing module is further configured to:
send a first message to the relay device through the sending module, where the first message includes the identification of the relay device under the second access network device and/or the identification of the terminal device under the second access network device.

As a possible implementation, the first message is a handover command response.

As a possible implementation, the apparatus further includes a receiving module;
where the receiving module is configured to receive a second message sent by the relay device, where the second message includes the identification of the relay device under the second access network device.

As a possible implementation, the second message is a handover command.

As a possible implementation, the processing module is specifically configured to:
perform handover of the relay device and the terminal device from the first access network device to the second access network device, and send a RLC data PDU to the relay device through the sending module, where the RLC data PDU includes the first identification information.

As a possible implementation, a header of the RLC data PDU includes the first identification information.

As a possible implementation, the first identification information is one bit of information in the header of the RLC data PDU.

As a possible implementation, communication between the terminal device and the relay device is performed through a sidelink, and communication between the relay device and the second access network is performed through an uplink and a downlink.

In an eighth aspect, the present application provides a communication apparatus, including: a processing module and a sending module;
where the processing module is configured to send a third message to a relay device through the sending module, where the third message is used to indicate a boundary data packet identification, the boundary data packet identification including an identification of a last data packet sent by the terminal device to a first access network device, or the boundary data packet identification including an identification of a first data packet sent by the terminal device to a second access network device.

In a ninth aspect, the present application provides a relay device, including:
a memory for storing program instructions; and
a processor for calling and executing the program instructions in the memory to execute steps of the method according to the first aspect or the second aspect.

In a tenth aspect, the present application provides a terminal device, including:
a memory for storing program instructions; and
a processor for calling and executing the program instructions in the memory to execute steps of the method according to the third aspect or the fourth aspect.

In an eleventh aspect, the present application provides a readable storage medium, where a computer program is stored in the readable storage medium, and the computer program is used to execute the method according to the first aspect, the second aspect, the third aspect or the fourth aspect.

In a twelfth aspect, an embodiment of the present application provides a computer program product, where the computer program product includes computer program code, and when the computer program code is executed by an energy storage module, the energy storage module is caused to execute the method according to the first aspect, the second aspect, the third aspect or the fourth aspect.

In the communication method provided by the present application, handover of the terminal device and the relay device from the first access network device to the second access network device is performed. When the terminal device sends the data packet to the relay device, the first identification information is carried in the data packet or the boundary data packet identification is indicated through the third message, so that the relay device can know that the data packet is a data packet to be sent to the second access network device based on the first identification information or the third message, and then the data packet can be correctly sent to the second access network device, thus realizing correct sending of data in a group handover scenario.

### BRIEF DESCRIPTION OF THE DRAWINGS

In order to illustrate the technical solutions in the present application or the prior art more clearly, the following will briefly introduce the drawings that need to be used in the description of embodiments or the prior art. Obviously, the drawings in the following description are some embodiments of the present application. For those of ordinary skill in the art, other drawings can also be obtained based on these drawings without creative effort.
FIG. 1 is an example diagram of a scenario where sidelink technology is applied.
FIG. 2 is a schematic diagram of a system involving a relay device in a traditional wireless cellular network.
FIG. 3 is a schematic diagram of a system involving a relay device in a sidelink communication network.
FIG. 4 is a schematic diagram of a group handover scenario.
FIG. 5 is an exemplary interaction flowchart of group handover.
FIG. 6 is a flow interaction diagram of a communication method provided by an embodiment of the present application.
FIG. 7 is a flow interaction diagram of another communication method provided by an embodiment of the present application.
FIG. 8 is a module structural diagram of a communication apparatus provided by an embodiment of the present application.
FIG. 9 is a module structural diagram of another communication apparatus provided by an embodiment of the present application.
FIG. 10 is still another communication apparatus provided by an embodiment of the present application.
FIG. 11 is a module structural diagram of yet another communication apparatus provided by an embodiment of the present application.
FIG. 12 is a schematic structural diagram of a relay device 1200 provided by an embodiment of the present application.
FIG. 13 is a schematic structural diagram of a terminal device 1300 provided by an embodiment of the present application.

### DESCRIPTION OF EMBODIMENTS

In order to make the purposes, technical solutions and advantages of the present application clearer, the technical solutions in embodiments of the present application will be described clearly and completely in conjunction with the accompanying drawings in the embodiments of the present application. Obviously, the described embodiments are part of the embodiments of the present application, but not all of the embodiments. Based on the embodiments in the present application, all other embodiments obtained by those of ordinary skill in the art without creative effort belong to the protection scope of the present application.

First of all, it should be noted that a sidelink may also be called a side link, a side-to-side link, a direct link or an inter-device link. The following embodiments of the present application all use the term "sidelink".

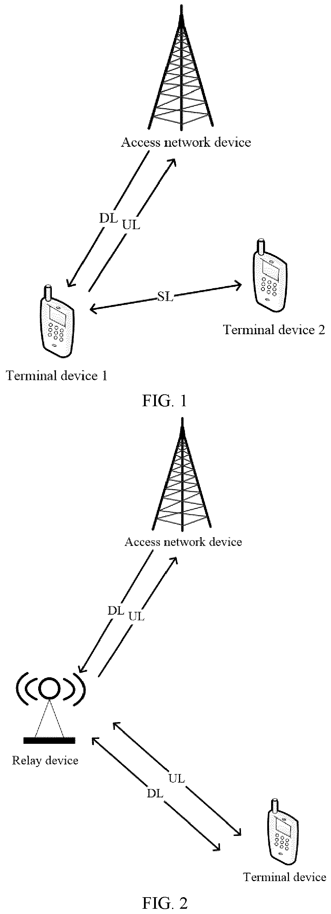

FIG. 1 is an example diagram of a scenario where sidelink technology is applied. As shown in FIG. 1, a communication network includes an access network device, a terminal device 1 and a terminal device 2. The terminal device 1 is connected to the access network device and the terminal device 2, respectively. Specifically, communication between the terminal device 1 and the access network device is performed through an uplink (LTL) and a downlink (DL), and communication between the terminal device 1 and the terminal device 2 is performed through a sidelink (SL). Based on the sidelink, data transmission can be directly carried out between the terminal device 1 and the terminal device 2 without going through the access network device.

On the basis of sidelink, a sidelink relay device is introduced, that is, a link between the relay device and a terminal device adopts sidelink technology. Communication between the relay device and the terminal device is performed based on a sidelink, and received data sent by a sender is forwarded to a receiver. For example, the relay device receives data from the terminal device based on the sidelink and forwards it to the access network device. Or, the relay device sends data, which is received from the access network device, to the terminal device based on the sidelink. A communication difference between a relay device in a traditional wireless cellular network and a relay device in a sidelink communication network is explained below by illustration. The sidelink communication network may refer to a communication network supporting the sidelink.

It should be understood that in the embodiments of the present application, it is defined that a unidirectional communication link from the access network device to the terminal device is a downlink, data transmitted on the downlink is downlink data, and a transmission direction of the downlink data is called a downlink direction; a unidirectional communication link from the terminal device to the access network device is an uplink, data transmitted on the uplink is uplink data, and a transmission direction of the uplink data is called an uplink direction.

FIG. 2 is a schematic diagram of a system involving a relay device in a traditional wireless cellular network. As shown in FIG. 2, in the traditional wireless cellular network, communication between a terminal device and a relay device is performed through an uplink and a downlink, and communication between the relay device and an access network device is performed through an uplink and a downlink. When the access network device needs to send data to the terminal device, the data is sent to the relay device through the downlink between the access network device and the relay device, and then the relay device forwards the data to the terminal device through the downlink between the relay device and the terminal device. When the terminal needs to send data to the access network device, the data is sent to the relay device through the uplink between the terminal device and the relay device, and then the relay device sends the data to the relay device through the uplink between the relay device and the access network device.

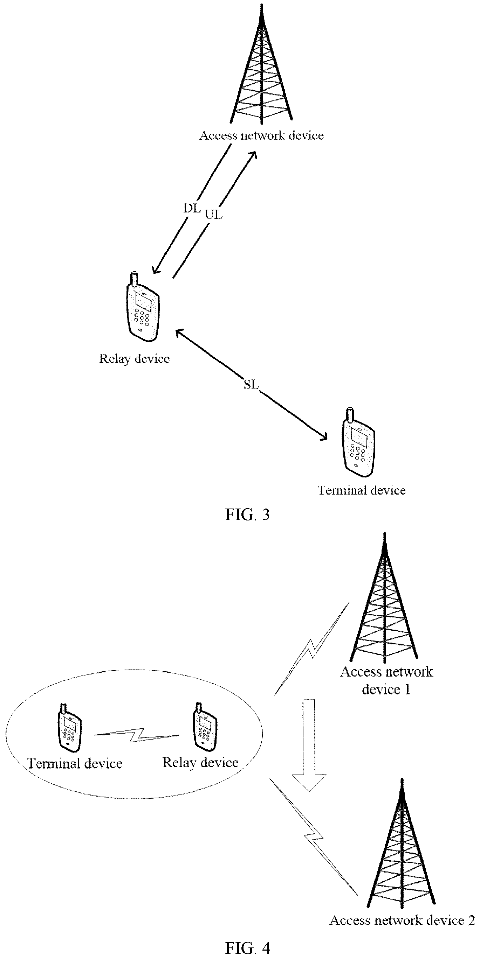

FIG. 3 is a schematic diagram of a system involving a relay device in a sidelink communication network. As shown in FIG. 3, in the sidelink communication network, communication between a terminal device and a relay device is performed through a sidelink, and communication between the relay device and an access network device is performed through an uplink and a downlink. When the access network device needs to send data to the terminal device, the data is sent to the relay device through the downlink between the access network device and the relay device, and then the relay device forwards the data to the terminal device through the sidelink between the relay device and the terminal device. When the terminal needs to send data to the access network device, the data is sent to the relay device through the sidelink between the terminal device and the relay device, and then the relay device sends the data to the relay device through the uplink between the relay device and the access network device.

In the sidelink communication network, the relay device may be a fixed device or a mobile device. Exemplarily, the relay device may be a mobile device such as a mobile phone. When the relay device is mobile, in some scenarios, it may occur that both the relay device and the terminal device move from a coverage area of an access network device to a coverage area of another access network device, that is, handover happens for both the relay device and the terminal device. In such handover, there is no relative movement between the relay device and the terminal device, and such handover may be called a group handover (group handover). That is, the group handover means that both the relay device and the terminal device are handed over from one access network device to another access network device, and a connection relationship between the relay device and the terminal device remains unchanged. FIG. 4 is a schematic diagram of a group handover scenario. As shown in FIG. 4, both of a relay device and a terminal device are handed over from an access network device 1 to an access network device 2, while the connection relationship between the relay device and the terminal device remains unchanged. After the handover, the terminal device still sends data to the access network device 2 through the relay device, and receives data from the access network device 2 through the relay device.

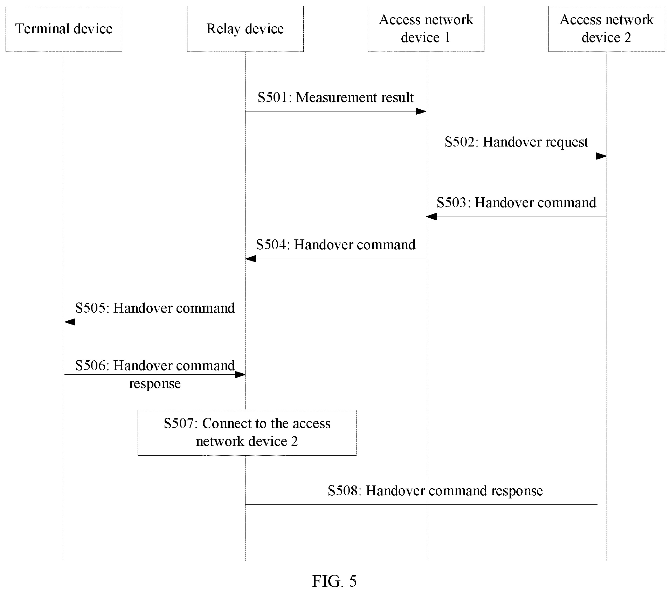

FIG. 5 is an exemplary interaction flowchart of a group handover. As shown in FIG. 5, assuming that an access network device 1 is an access network device before handover and an access network device 2 is an access network device after handover, the interaction flow of the group handover may include the following steps.

S501: a relay device sends a measurement result to the access network device 1.

S502: the access network device 1 sends a handover request to the access network device 2.

After receiving the measurement result, the access network device determines based on the measurement result that a terminal device moves to the access network device 2, and then the access network device 1 sends the handover request to the access network device 2.

S503: the access network device 2 sends a handover command to the access network device 1.

The handover command is used to instruct the terminal device to perform handover to the access network device 2. The handover command may include bearer configuration information, security configuration information and so on allocated by the access network device 2 to the terminal device.

S504: the access network device 1 sends the handover command to the relay device.

S505: the relay device sends the handover command to the terminal device.

S506: the terminal device sends a handover command response to the relay device.

After receiving the handover command, the terminal device performs handover to the access network device 2 based on the bearer configuration, the security configuration information and so on allocated by the access network device 2 to the terminal device, and sends the handover command response to the relay device.

S507: the relay device connects to the access network device 2.

After receiving the handover command response sent by the terminal device, the relay device can know that the terminal device has performed handover, and then the relay device performs handover to the access network device 2. And the relay device needs to forward the handover command response of the terminal device to the access network device 2.

After that, the relay device needs to forward data to the access network device 2 after receiving the data sent by the terminal device.

In the above process, after step S507, after receiving data sent by the terminal device, the relay device first needs to know that the data is to be sent to the access network device 2, and can then send the data to the access network device 2 correctly.

Assuming that the terminal device, the relay device, the access network device 1 and the access network device 2 in the above process are devices of a traditional cellular network, that is, the relay device and the terminal device communicate through an uplink and a downlink, after the relay device sends the handover command to the terminal device in step S505, the terminal device may be resynchronized with the relay device by using a random access process. Specifically, after receiving the handover command, the terminal device stops data transmission and initiates the random access process. After the random access is successful, the terminal device executes the above step S506 to send the handover command response to the relay device. All data received by the relay device from the terminal device after the handover command response is data to be sent to the access network device 2, so that the data can be sent to the access network device 2 correctly.

However, in the above group handover scenario, the relay device and the terminal device communicate through a sidelink, and the random access process is not supported in a sidelink communication mode. Therefore, after receiving the handover command, the terminal device may not stop the data transmission, but still sends data to the relay device, and the relay device may not know whether the received data is to be sent to the access network device 1 or the access network device 2, which may lead to a data transmission error.

Considering the above problems, in the embodiments of the present application, a terminal device indicates to a relay device that a data packet is a data packet to be sent to a before-handover access network device or an after-handover access network device, so that the relay device can send the data to a correct access network device, thus realizing correct sending of data.

The embodiments of the present application can be applied to a 5th generation (5 generation, 5G) communication system, a 4th generation (4 generation, 4G) communication system, or a 3rd generation (3 generation, 3G) communication system, or can be applied to a future 6th generation (6 generation, 6G) communication system, a 7th generation (7 generation, 7G) communication system, etc.

The relay device involved in the embodiments of the present application may be a movable relay device. The relay device may refer to various forms of a user equipment (user equipment, LTE), an access terminal, a user unit, a user station, a mobile radio station, a mobile station (mobile station, MS), a remote station, a remote terminal, a mobile device, a user terminal, a terminal equipment (terminal equipment), a wireless communication device, a user agent or a user apparatus. It may also be a cellular phone, a cordless phone, a session initiation protocol (Session Initiation Protocol, SIP) phone, a wireless local loop (Wireless Local Loop, WLL) station, a personal digital processing (Personal Digital Assistant, PDA), a handheld device with a wireless communication function, a computing device with a wireless communication function or other processing devices connected to a wireless modem, a vehicle-mounted device, a wearable device, a terminal device of a 5G network or a terminal device in a future evolved public land mobile network (Public Land Mobile Network, PLMN), etc., which is not limited in the embodiments of the present application.

The terminal device involved in the embodiments of the application may refer to various forms of a LTE, an access terminal, a user unit, a user station, a mobile radio station, a mobile station, a remote station, a remote terminal, a mobile device, a user terminal, a terminal equipment, a wireless communication device, a user agent or a user apparatus. It may also be a cellular phone, a cordless phone, a SIP phone, a WLL station, a PDA, a handheld device with a wireless communication function, a computing device with a wireless communication function or other processing devices connected to a wireless modem, a vehicle-mounted device, a wearable device, a terminal device of a 5G network or a terminal device in a future evolved PLMN, etc., which is not limited in the embodiments of the present application.

The wireless access network device involved in the embodiments of the present application, such as the first access network device and the second access network device, may be a base transceiver station (base transceiver station, BTS) in a global system for mobile communication (global system for mobile communication, GSM) or a code division multiple access (code division multiple access, CDMA) network, a nodebase station (nodebase station, NB) in a wideband code division multiple access (wideband code division multiple access, WCDMA), an evolutional (evolutional) NB (eNB or eNB) in a long term evolution (long term evolution, LTE), a wireless controller in a cloud radio access network (cloud radio access network, CRAN) scenario, a base station in a 5G mobile communication system or a new radio (new radio, NR) communication system, a base station in a future mobile communication system, an access node in a WiFi system, a device that undertakes a function of a base station in device-to-device (Device-to-Device, D2D) communication and machine communication, an access network device in a future evolved PLMN network or an Internet of Vehicles device, etc. The embodiments of the present application do not limit the specific technology and specific device form adopted by the wireless access network device. In the embodiments of the present application, terms "5G" and "new radio (NR)" may be equivalent.

The embodiments of the present application provide two solutions to implement that a terminal device indicates to a relay device that a data packet is to be sent to a before-handover access network device or an after-handover access network device. One solution is to give indication directly in a data packet that needs to be sent to an access network device, and the other solution is to give indication by using a separate indication message. The two solutions are described in detail below.

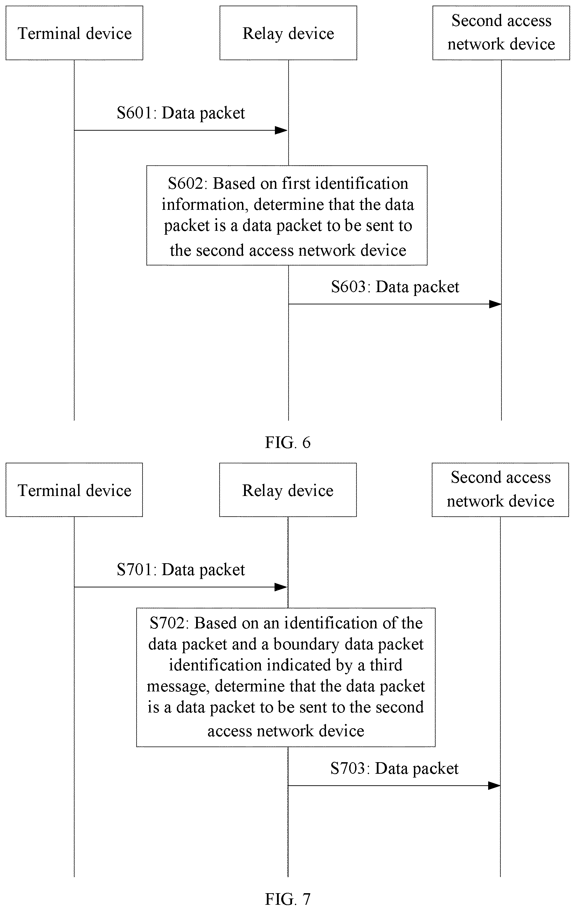

FIG. 6 is a flow interaction diagram of a communication method provided by an embodiment of the present application. As shown in FIG. 6, an interaction process between a terminal device and a relay device in a group handover scenario includes the following steps.

S601: the relay device and the terminal device perform handover from a first access network device to a second access network device, and the terminal device sends a data packet to the relay device, where the data packet includes first identification information, and the first identification information is used to identify sending the data packet to the second access network device.

Correspondingly, the relay device and the terminal device perform handover from the first access network device to the second access network device, and the relay device receives the data packet sent by the terminal device.

Optionally, the terminal device may send the data packet to the relay device in a process of the terminal device and the relay device performing handover from the first access network device to the second access network device, or after the terminal device and the relay device perform handover from the first access network device to the second access network device, which is not specifically limited in the embodiments of the present application. Exemplarily, assuming that a processing flow of the group handover is the flow shown in FIG. 5, the data packet sent by the terminal device in this step may be a data packet sent in a stage before step S507, or a data packet sent in a stage after step S507 or step S508.

The data packet described in the embodiments of the present application may be data processed by any layer in a protocol stack for transmission. Exemplarily, the data packet may be a packet data convergence protocol (packet data convergence protocol, PDCP) protocol data unit (protocol data unit, PDU), a radio link control (radio link control, RLC) PDU, a media access control (media access control, MAC) PDU, a physical layer transmission block and a corresponding scheduling signaling, etc.

Accordingly, the first identification information included in the data packet may be, for example, identification information of a header part of the data packet, or identification information of a data part of the data packet, or identification information of a scheduling signaling part, which is not specifically limited in the embodiments of the present application.

S602: the relay device determines based on the first identification information that the data packet is a data packet to be sent to the second access network device.

S603: the relay device sends the data packet to the second access network device.

The relay device sends the data packet to the second access network device based on the first identification information.

After receiving the data packet, the relay device can know from the first identification information that the data packet is a data packet to be sent to the second access network device.

It is worth noting that if the relay device receives a data packet to be sent to the first access network device, the data packet may carry identification information different from the first identification information, and the relay device can know from the identification information that the data packet is to be sent to the first access network device.

In this embodiment, the terminal device and the relay device perform handover from the first access network device to the second access network device. When the terminal device sends the data packet to the relay device, the first identification information is carried in the data packet, so that the relay device can know from the first identification information that the data packet is a data packet to be sent to the second access network device, and then the data packet can be sent to the second access network device correctly, thus realizing the correct sending of data in the group handover scenario.

In the embodiments of the present application, the first identification information may be carried in the data packet in the following two manners.

In a first manner, an identification of the relay device under the second access network device and/or an identification of the terminal device under the second access network device are carried in the data packet, and the identification is used as the first identification information.

In a second manner, the first identification information is carried in an RLC data PDU.

Processing procedures of the above two manners are described below.

First, a processing procedure of the first manner is described below.

In this manner, the first identification information includes the identification of the relay device under the second access network device and/or the identification of the terminal device under the second access network device.

The identification of the relay device under the second access network device is different from an identification of the relay device under the first access network device, and/or the identification of the terminal device under the second access network device is different from an identification of the terminal device under the first access network device.

In the embodiments of the present application, the relay device may use different identifications to communicate with different access network devices. Exemplarily, the relay device uses an identification Relay 1 to communicate with the first access network device, and when the relay device is handed over from the first access network device to the second access network device, the relay device may use an identification Relay 2 to communicate with the second access network device. Therefore, Relay 1 and Relay 2 both identify the same relay device, but are respectively used for the relay device to communicate with different access network devices.

The terminal device may use different identifications to communicate with different access network devices. Exemplarily, the terminal device uses an identification Terminal 1 to communicate with the first access network device, and when the terminal device is handed over from the first access network device to the second access network device, the terminal device may use an identification Terminal 2 to communicate with the second access network device. Therefore, Terminal 1 and Terminal 2 both identify the same terminal device, but are respectively used for the terminal device to communicate with different access network devices.

When sending the data packet to the relay device, the terminal device may carry at least one of the identification of the relay device under the second access network device and the identification of the terminal device under the second access network device in the data packet, whereby the relay device determines that the data packet is a data packet to be sent to the second access network device.

In a first case, only the identification of the relay device under the second access network device is carried in the data packet. Since the identification of the relay device under the first access network device is different from the identification of the relay device under the second access network device, after receiving the data packet, the relay device can identify that the data packet is a data packet to be sent to a new after-handover access network device (i.e., the second access network device) by using the identification of the relay device under the second access network device in the data packet, so as to send the data packet to the second access network device correctly.

In a second case, only the identification of the terminal device under the second access network device is carried in the data packet. Since the identification of the terminal device under the first access network device is different from the identification of the terminal device under the second access network device, after receiving the data packet, the relay device can identify that the data packet is a data packet to be sent to a new after-handover access network device (i.e., the second access network device) by using the identification of the terminal device under the second access network device in the data packet, so as to send the data packet to the second access network device correctly.

In a third case, the identification of the terminal device under the second access network device and the identification of the relay device under the second access network device are carried in the data packet simultaneously. Since the identification of the terminal device under the first access network device is different from the identification of the terminal device under the second access network device, and the identification of the relay device under the first access network device is different from the identification of the relay device under the second access network device, after receiving the data packet, the relay device can identify that the data packet is a data packet to be sent to a new after-handover access network device (i.e., the second access network device) by using the identifications in the data packet, so as to send the data packet to the second access network device correctly.

Optionally, the identification of the relay device under the second access network device may be carried in a destination identification (Destination ID) field of the data packet, and the identification of the terminal device under the second access network device may be carried in a source identification (Source ID) field of the data packet. For example, in this manner, the data packet may be a MAC PDU, and the destination identification and the source identification are carried in a header of the data packet; or the data packet may be a physical layer transmission block, and the destination identification and the source identification are carried in a corresponding scheduling signaling.

As an optional implementation, the relay device may send the identification of the relay device under the second access network device to the terminal device through a second message.

The relay device sends the second message to the terminal device, and correspondingly, the terminal device receives the second message.

The second message may be a separate message only for carrying the identification of the relay device under the second access network device, or the second message may be a handover related message sent by the relay device to the terminal device during the group handover.

Taking the group handover interaction flow shown in FIG. 5 as an example, the second message may be the handover command sent by the relay device to the terminal device in step S505.

If the relay device sends the second message to the terminal device, the terminal device may choose to carry the identification of the relay device under the second access network device in the data packet sent to the second access network device, or carry the identification of the relay device under the second access network device and the identification of the terminal device under the second access network device in the data packet sent to the second access network device. Or, the terminal device may also choose not to carry the identification of the relay device under the second access network device in the data packet, but only the identification of the terminal device under the second access network device.

As an optional implementation, the terminal device may send a first message to the relay device, and correspondingly, the relay device receives the first message. The first message includes the identification of the relay device under the second access network device and/or the identification of the terminal device under the second access network device.

Taking the group handover interaction flow shown in FIG. 5 as an example, the first message may be the handover command response sent by the terminal device to the relay device in step S506.

The terminal device carries the identification of the relay device under the second access network device and/or the identification of the terminal device under the second access network device in the handover command response, so that the relay device can know that the handover command response is a message to be sent to the second access network device, and can then send the handover command response to the second access network device correctly.

In the above first manner, by carrying the identification of the relay device under the second access network device and/or the identification of the terminal device under the second access network device in the data packet, the relay device can know that the data packet is a data packet to be sent to the second access network device, thus realizing correct sending of the data packet.

A processing procedure of the second manner is described below.

In this manner, the terminal device may carry the first identification information in an RLC data PDU.

The terminal device sends the RLC data PDU to the relay device, and correspondingly, the relay device receives the RLC data PDU. The RLC data PDU includes the first identification information.

In the second manner, the data packet specifically refers to the RLC data PDU.

An RLC layer PDU includes an RLC data PDU and an RLC control PDU. In the second manner, the RLC data PDU is used to carry the first identification information.

The RLC data PDU may include a header part and a data part. As an optional implementation, the first identification information may be carried in a header of the RLC data PDU.

In a possible way, the first identification information may be represented using a plurality of bits in the header of the RLC data PDU. Exemplarily, preset bits such as 2 preset bits and 3 preset bits in the header may be used for representation.

Taking 2 preset bits being used for representation as an example, the first identification information may be carried by accumulating values on the bits. Exemplarily, the terminal device is under an access network device 1 currently, and the terminal device may write 00 on preset bits of a header of an RLC data PDU sent to the relay device to indicate that the data packet is to be sent to the access network device 1. When the terminal device is handed over from the access network device 1 to an access network device 2 and sends data to the access network device 2, the terminal device may write 01 on preset bits of a header of an RLC data PDU sent to the relay device to indicate that the data packet is to be sent to the access network device 2. When the terminal device is handed over from the access network device 2 to an access network device 3 and sends data to the access network device 3, the terminal device may write 10 on preset bits of a header of an RLC data PDU sent to the relay device to indicate that the data packet is to be sent to the access network device 3. Based on values of the 2 bits, the relay device can identify that the data packet is to be sent to a new after-handover access network device.

In another possible way, the first identification information may be represented by one preset bit in the header of the RLC data PDU. That is, the first identification information is one bit of information in the header of the RLC data PDU.

In this way, the terminal device may carry the first identification information by flipping a value of the one preset bit.

Exemplarily, the terminal device is under the access network device 1 currently, and the terminal device may write 0 on a preset bit of a header of an RLC data PDU sent to the relay device to indicate that the data packet is to be sent to the access network device 1. When the terminal device is handed over from the access network device 1 to the access network device 2 and sends data to the access network device 2, the terminal device may write 1 on the preset bit of a header of an RLC data PDU sent to the relay device to indicate that the data packet is to be sent to the access network device 2. When the terminal device is handed over from the access network device 2 to the access network device 3 and sends data to the access network device 3, the terminal device may write 0 on the preset bit of the header of the RLC data PDU sent to the relay device to indicate that the data packet is sent to the access network device 3. Based on the value of the one bit, the relay device can identify that the data packet is to be sent to a new after-handover access network device.

In the above second manner, by carrying the first identification information in the RLC data PDU, the relay device can know that the data packet is a data packet to be sent to the second access network device, thus realizing the correct sending of the data packet.

One technical solution of the embodiments of the present application is described above, that is, an indication that the data packet is a data packet to be sent to the after-handover access network device is given directly in the data packet that the terminal device needs to send to the access network device. As described above, the embodiments of the present application also provide another solution, that is, a solution of using a separate indication message to indicate that the data packet is a data packet to be sent to the after-handover access network device.

Another solution is described in detail below.

FIG. 7 is a flow interaction diagram of another communication method provided by an embodiment of the present application. As shown in FIG. 7, an interaction process between a terminal device and a relay device in a group handover scenario includes the following steps.

S701: the relay device and the terminal device perform handover from a first access network device to a second access network device, and the terminal device sends a data packet to the relay device.

Correspondingly, the relay device receives the data packet sent by the terminal device.

The terminal device may send the data packet to the relay device in a process of the terminal device and the relay device performing handover from the first access network device to the second access network device, or after the terminal device and the relay device perform handover from the first access network device to the second access network device, which is not specifically limited in the embodiments of the present application. Exemplarily, assuming that a processing flow of the group handover is the flow shown in FIG. 5, the data packet sent by the terminal device in this step may be a data packet sent in a stage before step S507, or a data packet sent in a stage after step S507 or step S508.

S702: the relay device determines that the data packet is a data packet to be sent to the second access network device, based on an identification of the data packet and a boundary data packet identification indicated by a third message.

S703: the relay device sends the data packet to the second access network device.

The relay device sends the data packet to the second access network device based on the identification of the data packet and the boundary data packet identification indicated by the third message.

The boundary data packet identification includes an identification of a last data packet sent by the terminal device to the first access network device, or the boundary data packet identification includes an identification of a first data packet sent by the terminal device to the second access network device.

As an example, the identification of the data packet and the boundary data packet identification may refer to sequence numbers (sequence numbers, SNs) of the data packets, respectively. A sequence number can identify a data packet uniquely.

Before executing this embodiment, the terminal device has sent the third message to the relay device in advance.

It is worth noting that the third message is also carried in a data packet sent to the relay device, but this data packet is a data packet destined for the relay device. That is, after this data packet is sent to the relay device, the relay device parses the third message and the boundary data packet identification indicated by the third message from this data packet, without sending this data packet to other devices. But the foregoing data packet in the present application is a data packet destined for the access network device, and after receiving the data packet, the relay device needs to send it to the access network device.

Exemplarily, the terminal device may send the third message to the relay device before sending the first data packet that needs to be sent to the second access network device or after sending the last data packet that needs to be sent to the first access network device. The third message carries the identification of the first data packet that needs to be sent to the second access network device, or the identification of the last data packet that needs to be sent to the first access network device, called the boundary data packet identification. After receiving the third message, the relay device may parse and save the boundary data packet identification. Further, after receiving the data packet from the terminal device, the relay device compares the identification of the received data packet with the boundary data packet, so that the data packet can be recognized as a data packet to be sent to the second access network device.

In this embodiment, the relay device and the terminal device perform handover from the first access network device to the second access network device. The terminal device can send the third message to the relay device in advance to indicate the boundary data packet identification. After receiving the data packet from the terminal device, the relay device can identify that the data packet is a data packet to be sent to the second access network device based on the identification of the received data packet and the boundary data packet identification, and then send the data packet to the second access network device, thus realizing correct sending of data in the group handover scenario.

As an optional implementation, the terminal device may send the third message to the relay device, and carry the above in the third message.

Optionally, the third message may be carried by an RLC control PDU.

The RLC control PDU is used to carry the third message, that is, a separate control signaling is used to indicate the boundary data packet identification.

The following describes a process that the relay device determines that the data packet is a data packet to be sent to the second access network device based on the identification of the data packet and the boundary data packet identification in step S702.

In one case, if the boundary data packet identification includes the identification of the last data packet sent by the terminal device to the first access network device, after receiving the data packet sent by the terminal device, the relay device determines whether the identification of the data packet is greater than the identification of the last data packet. If so, the relay device sends the received data packet to the second access network device. Otherwise, the relay device sends the received data packet to the first access network device.

In another case, if the boundary data packet identification includes the identification of the first data packet sent by the terminal device to the second access network device, after receiving the data packet sent by the terminal device, the relay device determines whether the identification of the data packet is greater than or equal to the identification of the first data packet. If so, the relay device sends the received data packet to the second access network device. Otherwise, the relay device sends the received data packet to the first access network device.

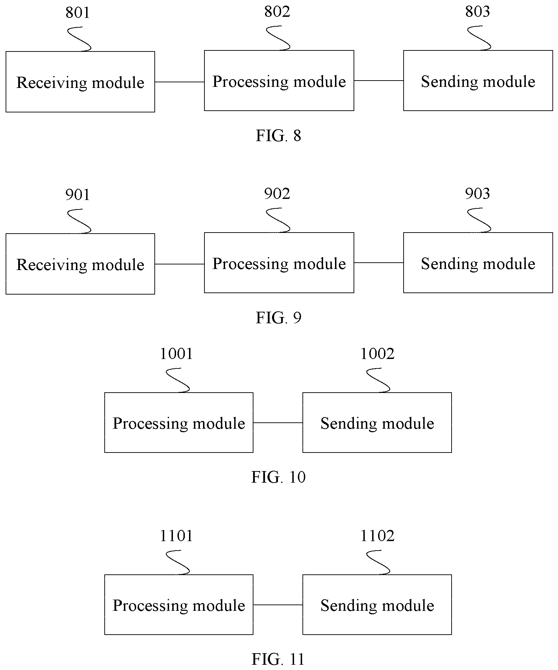

FIG. 8 is a module structural diagram of a communication apparatus provided by an embodiment of the present application. The apparatus may be the above relay device, or may be an apparatus that enables a relay device to realize functions of the relay device in the methods provided by the embodiments of the present application. For example, the apparatus may be an apparatus or a chip system in the relay device. As shown in FIG. 8, the apparatus includes a receiving module 801, a processing module 802 and a sending module 803. These modules may be software and/or hardware.

The receiving module 801 is configured to perform handover of a relay device and a terminal device from a first access network device to a second access network device, and receive a data packet sent by the terminal device, where the data packet includes first identification information, and the first identification information is used to identify sending the data packet to the second access network device.

The processing module 802 is configured to send the data packet to the second access network device through the sending module 803 based on the first identification information.

As an optional implementation, the first identification information includes an identification of the relay device under the second access network device and/or an identification of the terminal device under the second access network device; where the identification of the relay device under the second access network device is different from an identification of the relay device under the first access network device, and/or the identification of the terminal device under the second access network device is different from an identification of the terminal device under the first access network device.

As an optional implementation, the receiving module 801 is further configured to:
receive a first message sent by the terminal device, where the first message includes the identification of the relay device under the second access network device and/or the identification of the terminal device under the second access network device.

As an optional implementation, the first message is a handover command response.

As an optional implementation, the sending module 803 is further configured to:
send a second message to the terminal device, where the second message includes the identification of the relay device under the second access network device.

As an optional implementation, the second message is a handover command.

As an optional implementation, the receiving module 801 is specifically configured to:
perform handover of the relay device and the terminal device from the first access network device to the second access network device, and receive an RLC data PDU sent by the terminal device, where the RLC data PDU includes the first identification information.

As an optional implementation, a header of the RLC data PDU includes the first identification information.

As an optional implementation, the first identification information is one bit of information in the header of the RLC data PDU.

As an optional implementation, communication between the terminal device and the relay device is performed through a sidelink, and communication between the relay device and the second access network is performed through an uplink and a downlink.

FIG. 9 is a module structural diagram of another communication apparatus provided by an embodiment of the present application. The apparatus may be the above relay device, or may be an apparatus that enables a relay device to realize functions of the relay device in the methods provided by the embodiments of the present application. For example, the apparatus may be an apparatus or a chip system in the relay device. As shown in FIG. 9, the apparatus includes a receiving module 901, a processing module 902 and a sending module 903. These modules may be software and/or hardware.

The receiving module 901 is configured to perform handover of a relay device and a terminal device from a first access network device to a second access network device, and receive a data packet sent by the terminal device.

The processing module 902 is configured to send the data packet to the second access network device through the sending module 903 based on an identification of the data packet and a boundary data packet identification indicated by a third message; where the boundary data packet identification includes an identification of a last data packet sent by the terminal device to the first access network device, or the boundary data packet identification includes an identification of a first data packet sent by the terminal device to the second access network device.

As an optional implementation, the receiving module 901 is further configured to:
receive the third message, where the third message includes the boundary data packet identification.

As an optional implementation, the processing module 902 is specifically configured to:
send the data packet to the second access network device through the sending module if the identification of the data packet is greater than the identification of the last data packet.

As an optional implementation, the processing module 902 is specifically configured to:
send the data packet to the second access network device through the sending module if the identification of the data packet is greater than or equal to the identification of the first data packet.

As an optional implementation, communication between the terminal device and the relay device is performed through a sidelink, and communication between the relay device and the second access network is performed through an uplink and a downlink.

FIG. 10 is still another communication apparatus provided by an embodiment of the present application. The apparatus may be the above terminal device, or may be an apparatus that enables a terminal device to realize functions of the terminal device in the methods provided by the embodiments of the present application. For example, the apparatus may be an apparatus or a chip system in the terminal device. As shown in FIG. 10, the apparatus includes a processing module 1001 and a sending module 1002. These modules may be software and/or hardware.

The processing module 1001 is configured to perform handover of a relay device and a terminal device from a first access network device to a second access network device, and send a data packet to the relay device through the sending module 1002, where the data packet includes first identification information, and the first identification information is used to identify sending the data packet to the second access network device.

As an optional implementation, the first identification information includes an identification of the relay device under the second access network device and/or an identification of the terminal device under the second access network device; where the identification of the relay device under the second access network device is different from an identification of the relay device under the first access network device, and/or the identification of the terminal device under the second access network device is different from an identification of the terminal device under the first access network device.

As an optional implementation, the processing module 1001 is further configured to:
send a first message to the relay device through the sending module 1002, where the first message includes the identification of the relay device under the second access network device and/or the identification of the terminal device under the second access network device.

As an optional implementation, the first message is a handover command response.

As an optional implementation, referring to FIG. 10, the apparatus further includes a receiving module 1003.

The receiving module 1003 is configured to receive a second message sent by the relay device, where the second message includes the identification of the relay device under the second access network device.

As an optional implementation, the second message is a handover command.

As an optional implementation, the processing module 1001 is specifically configured to:
perform handover of the relay device and the terminal device from the first access network device to the second access network device, and send an RLC data PDU to the relay device through the sending module, where the RLC data PDU includes the first identification information.

As an optional implementation, a header of the RLC data PDU includes the first identification information.

As an optional implementation, the first identification information is one bit of information in the header of the RLC data PDU.

As an optional implementation, communication between the terminal device and the relay device is performed through a sidelink, and communication between the relay device and the second access network is performed through an uplink and a downlink.

FIG. 11 is a module structural diagram of yet another communication apparatus provided by an embodiment of the present application. The apparatus may be the above terminal device, or may be an apparatus that enables a terminal device to realize functions of the terminal device in the methods provided by the embodiments of the present application. For example, the apparatus may be an apparatus or a chip system in the terminal device. As shown in FIG. 11, the apparatus includes a processing module 1101 and a sending module 1102. These modules may be software and/or hardware.

The processing module 1101 is configured to send a third message to a relay device through the sending module 1102, where the third message is used to indicate a boundary data packet identification, the boundary data packet identification including an identification of a last data packet sent by the terminal device to a first access network device, or the boundary data packet identification including an identification of a first data packet sent by the terminal device to a second access network device.

The above communication apparatuses provided by the embodiments of the present application can execute method steps in the above method embodiments, and implementation principles and technical effects thereof are similar, which will not be repeated here.

It should be noted that, it should be understood that the division of various modules of the above apparatuses is only division of logical functions, and all or part of the modules may be integrated into one physical entity, or physically separated in actual implementations. All these modules may be implemented in a form of software called by a processing element; or all these modules may be implemented in a form of hardware; or some modules may be implemented in a form of software called by a processing element, while some modules may be implemented in a form of hardware. For example, a determination module may be a separately disposed processing element, or may be integrated into a certain chip of the above apparatus for implementation. In addition, it may also be stored in a memory of the above apparatus in a form of program code, and the program code may be called and executed by a certain processing element of the above apparatus to achieve the function of the determination module. Other modules are implemented similarly. Moreover, all or part of these modules may be integrated together or implemented independently. The processing element described here may be an integrated circuit with signal processing capability. In an implementation process, the steps of the above methods or the above modules may be completed through an integrated logic circuit of hardware in a processor element or instructions in a form of software.

For example, the above modules may be one or more integrated circuits configured to implement the above methods, such as one or more application specific integrated circuits (application specific integrated circuits, ASICs), or one or more digital signal processors (digital signal processors, DSPs), or one or more field programmable gate arrays (field programmable gate arrays, FPGAs), etc. For another example, when one of the above modules is implemented in a form of program code being scheduled by a processing element, the processing element may be a general-purpose processor, such as a central processing unit (central processing unit, CPU) or other processors that can call the program code. For example, these modules may be integrated together and implemented in a form of system-on-a-chip (system-on-a-chip, SOC).

The above embodiments may be implemented fully or partially by software, hardware, firmware or any combination thereof. When implemented in software, they may be fully or partially implemented in a form of a computer program product. The computer program product includes one or more computer instructions. When the computer program instructions are loaded and executed on a computer, all or part of processes or functions according to the embodiments of the present application are generated. The computer may be a general-purpose computer, a special-purpose computer, a computer network or other programmable apparatuses. The computer instructions may be stored in a computer-readable storage medium, or transmitted from one computer-readable storage medium to another. For example, the computer instructions may be transmitted from a website, computer, server or data center to another website, computer, server or data center via wires (such as coaxial cables, optical fibers, digital subscriber lines (DSLs)) or wirelessly (such as in infrared mode, wirelessly, in microwaves, etc.). The computer-readable storage medium may be any available medium that a computer can access or a data storage device including a server or a data center integrated with one or more available media. The available media may be magnetic media (e.g., floppy disks, hard disks, magnetic tapes), optical media (e.g., DVDs), or semiconductor media (e.g., solid state disks (solid state disks, SSDs)), etc.

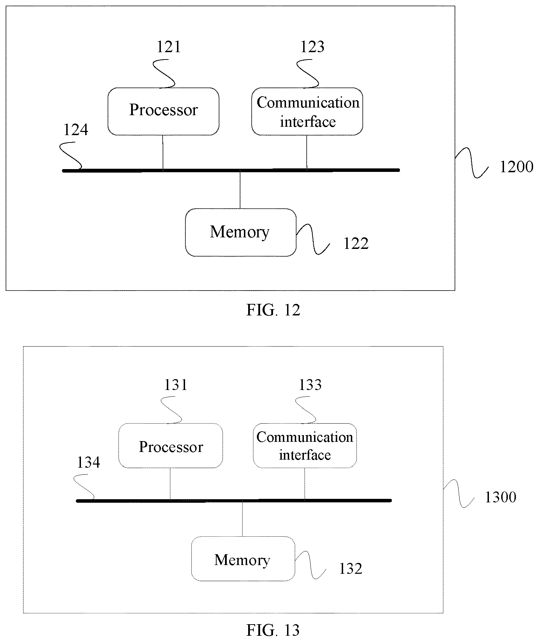

FIG. 12 is a schematic structural diagram of a relay device 1200 provided by an embodiment of the present application. As shown in FIG. 12, the relay device may include a processor 121, a memory 122, a communication interface 123, and a system bus 124. The memory 122 and the communication interface 123 are connected with the processor 121 through the system bus 124 and communication is conducted therebetween. The memory 122 is used to store computer execution instructions, and the communication interface 123 is used to communicate with other devices. When the processor 121 executes the computer program, the solutions of the relay devices according to the above embodiments shown in FIG. 6 to FIG. 7 are implemented.

The system bus mentioned in FIG. 12 may be a peripheral component interconnect (peripheral component interconnect, PCI) bus or an extended industry standard architecture (extended industry standard architecture, EISA) bus, etc. The system bus may be divided into an address bus, a data bus, a control bus, etc. For convenience of representation, only a thick line is shown in the figure, but it does not mean that there is only one bus or one type of buses. The communication interface is used to realize communication between a database access apparatus and other devices (such as a client, a read-write library and a read-only library). The memory may include a random access memory (random access memory, RAM), and may also include a non-volatile memory (non-volatile memory), such as at least one disk memory.

The above processor may be a general-purpose processor, including a central processing unit (CPU), a network processor (network processor, NP), etc. Or the above processor may be a digital signal processor (DSP), an application specific integrated circuit (ASIC), a field programmable gate array (FPGA) or other programmable logic devices, discrete gates or transistor logic devices, or discrete hardware components.

FIG. 13 is a schematic structural diagram of a terminal device 1300 provided by an embodiment of the present application. As shown in FIG. 13, the terminal device may include a processor 131, a memory 132, a communication interface 133 and a system bus 134. The memory 132 and the communication interface 133 are connected with the processor 131 through the system bus 134 and communication is conducted therebetween. The memory 132 is used to store computer execution instructions, and the communication interface 133 is used to communicate with other devices. When the processor 131 executes the computer program, the solutions of the terminal devices according to the above embodiments shown in FIG. 6 to FIG. 7 are implemented.

The system bus mentioned in FIG. 13 may be a PCI bus or an EISA bus, etc. The system bus may be divided into an address bus, a data bus, a control bus, etc. For convenience of representation, only a thick line is shown in the figure, but it does not mean that there is only one bus or one type of buses. The communication interface is used to realize communication between a database access apparatus and other devices (such as a client, a read-write library and a read-only library). The memory may include a RAM, and may also include a non-volatile memory (non-volatile memory), such as at least one disk memory.

The above processor may be a general-purpose processor, including a central processing unit (CPU), an NP, etc. Or the above processor may be a digital signal processor (DSP), an application specific integrated circuit (ASIC), a field programmable gate array (FPGA) or other programmable logic devices, discrete gates or transistor logic devices, or discrete hardware components.

Optionally, an embodiment of the present application further provides a storage medium, and the storage medium has instructions stored therein. When the instructions are run on a computer, the computer is caused to execute the methods of the relay devices or the methods of the terminal devices according to the above embodiments shown in FIG. 6 to FIG. 7.

Optionally, an embodiment of the present application further provides a chip for running instructions. The chip is used to execute the methods of the relay devices or the methods of the terminal devices according to the above embodiments shown in FIG. 6 to FIG. 7.

An embodiment of the present application further provides a program product. The program product includes a computer program, and the computer program is stored in a storage medium. At least one processor can read the computer program from the storage medium, and when the computer program is executed by the at least one processor, the methods of the relay devices or the methods of the terminal devices according to the above embodiments shown in FIG. 6 to FIG. 7 are implemented.

In the embodiments of the present application, "at least one" refers to one or more, and "a plurality of" refers to two or more. "And/or" describes an association relationship of associated objects and indicates that three relationships may exist. For example, "A and/or B" may indicate that A exists alone, A and B exist at the same time, and B exists alone, where A and B may be singular or plural. The character "/" generally indicates that associated objects before and after the character are of an "or" relationship. In a formula, the character "/" indicates that associated objects before and after the character are of a "division" relationship. "At least one of the following items" or its similar expression refers to any combination of these items, including a single item or any combination of plural items. For example, at least one of a, b or c may represent: a, b, c, a-b, a-c, b-c, or a-b-c, where a, b and c may be single or multiple.

It can be understood that various numerical numbers involved in the embodiments of the present application are only distinctions for convenience of description, and are not used to limit the scope of the embodiments of the present application.

It can be understood that in the embodiments of the present application, the sequence numbers of the above processes do not mean an execution order, and the execution order of the processes should be determined by their functions and internal logic, and should not constitute any limitation on the implementation process of the embodiments of the present application.

Finally, it should be noted that the above embodiments are only used to illustrate technical solutions of the present application, but not to limit it. Although the present application has been described in detail with reference to the aforementioned embodiments, those skilled in the art should understand that they can still modify the technical solutions described in the aforementioned embodiments, or equivalently replace some or all of the technical features, and these modifications or substitutions do not depart the essence of the corresponding technical solutions from the scope of the technical solutions of the embodiments of the present application.

## Claims

1. A communication method, comprising:
performing handover of a relay device and a terminal device from a first access network device to a second access network device, and receiving, by the relay device, a data packet sent by the terminal device, wherein the data packet comprises first identification information, and the first identification information is used to identify sending the data packet to the second access network device; and
sending, by the relay device, the data packet to the second access network device based on the first identification information.

2. The method according to claim 1, wherein the first identification information comprises an identification of the relay device under the second access network device and/or an identification of the terminal device under the second access network device;
wherein the identification of the relay device under the second access network device is different from an identification of the relay device under the first access network device, and/or the identification of the terminal device under the second access network device is different from an identification of the terminal device under the first access network device.

3. The method according to claim 2, further comprising:
receiving, by the relay device, a first message sent by the terminal device, wherein the first message comprises the identification of the relay device under the second access network device and/or the identification of the terminal device under the second access network device.

4. The method according to claim 3, wherein the first message is a handover command response.

5. The method according to any one of claims 2-4, further comprising:
sending, by the relay device, a second message to the terminal device, wherein the second message comprises the identification of the relay device under the second access network device.

6. The method according to claim 5, wherein the second message is a handover command.

7. The method according to claim 1, wherein performing handover of the relay device and the terminal device from the first access network device to the second access network device, and receiving, by the relay device, the data packet sent by the terminal device comprises:
performing handover of the relay device and the terminal device from the first access network device to the second access network device, and receiving, by the relay device, a radio link control RLC data protocol data unit PDU sent by the terminal device, wherein the RLC data PDU comprises the first identification information.

8. The method according to claim 7, wherein a header of the RLC data PDU comprises the first identification information.

9. The method according to claim 8, wherein the first identification information is one bit of information in the header of the RLC data PDU.

10. The method according to any one of claims 1-9, wherein communication between the terminal device and the relay device is performed through a sidelink, and communication between the relay device and the second access network is performed through an uplink and a downlink.

11. A communication method, comprising:
performing handover of a relay device and a terminal device from a first access network device to a second access network device, and receiving, by the relay device, a data packet sent by the terminal device; and
sending, by the relay device, the data packet to the second access network device based on an identification of the data packet and a boundary data packet identification indicated by a third message; wherein the boundary data packet identification comprises an identification of a last data packet sent by the terminal device to the first access network device, or the boundary data packet identification comprises an identification of a first data packet sent by the terminal device to the second access network device.

12. The method according to claim 11, further comprising:
receiving the third message, wherein the third message comprises the boundary data packet identification.

13. The method according to claim 11 or 12, wherein sending, by the relay device, the data packet to the second access network device based on the identification of the data packet and the boundary data packet identification indicated by the third message comprises:
sending the data packet to the second access network device if the identification of the data packet is greater than the identification of the last data packet.

14. The method according to claim 11, wherein sending, by the relay device, the data packet to the second access network device based on the identification of the data packet and the boundary data packet identification indicated by the third message comprises:
sending the data packet to the second access network device if the identification of the data packet is greater than or equal to the identification of the first data packet.

15. The method according to any one of claims 11-14, wherein communication between the terminal device and the relay device is performed through a sidelink, and communication between the relay device and the second access network is performed through an uplink and a downlink.

16. A communication method, comprising:
performing handover of a relay device and a terminal device from a first access network device to a second access network device, and sending, by the terminal device, a data packet to the relay device, wherein the data packet comprises first identification information, and the first identification information is used to identify sending the data packet to the second access network device.

17. The method according to claim 16, wherein the first identification information comprises an identification of the relay device under the second access network device and/or an identification of the terminal device under the second access network device;
wherein the identification of the relay device under the second access network device is different from an identification of the relay device under the first access network device, and/or the identification of the terminal device under the second access network device is different from an identification of the terminal device under the first access network device.

18. The method according to claim 17, further comprising:
sending, by the terminal device, a first message to the relay device, wherein the first message comprises the identification of the relay device under the second access network device and/or the identification of the terminal device under the second access network device.

19. The method according to claim 18, wherein the first message is a handover command response.

20. The method according to any one of claims 17-19, further comprising:
receiving, by the terminal device, a second message sent by the relay device, wherein the second message comprises the identification of the relay device under the second access network device.

21. The method according to claim 20, wherein the second message is a handover command.

22. The method according to claim 16, wherein performing handover of the relay device and the terminal device from the first access network device to the second access network device, and sending, by the terminal device, the data packet to the relay device comprises:
performing handover of the relay device and the terminal device from the first access network device to the second access network device, and sending, by the terminal device, a radio link control RLC data protocol data unit PDU to the relay device, wherein the RLC data PDU comprises the first identification information.

23. The method according to claim 22, wherein a header of the RLC data PDU comprises the first identification information.

24. The method according to claim 23, wherein the first identification information is one bit of information in the header of the RLC data PDU.

25. The method according to any one of claims 16-24, wherein communication between the terminal device and the relay device is performed through a sidelink, and communication between the relay device and the second access network is performed through an uplink and a downlink.

26. A communication method, comprising:
sending, by a terminal device, a third message to a relay device, wherein the third message is used to indicate a boundary data packet identification, the boundary data packet identification comprising an identification of a last data packet sent by the terminal device to a first access network device, or the boundary data packet identification comprising an identification of a first data packet sent by the terminal device to a second access network device.

27. A communication apparatus, comprising: a receiving module, a processing module and a sending module;
wherein the receiving module is configured to perform handover of a relay device and a terminal device from a first access network device to a second access network device, and receive a data packet sent by the terminal device, wherein the data packet comprises first identification information, and the first identification information is used to identify sending the data packet to the second access network device; and
the processing module is configured to send the data packet to the second access network device through the sending module based on the first identification information.

28. A communication apparatus, comprising: a receiving module, a processing module and a sending module;
wherein the receiving module is configured to perform handover of a relay device and a terminal device from a first access network device to a second access network device, and receive a data packet sent by the terminal device; and
the processing module is configured to send the data packet to the second access network device through the sending module based on an identification of the data packet and a boundary data packet identification indicated by a third message; wherein the boundary data packet identification comprises an identification of a last data packet sent by the terminal device to the first access network device, or the boundary data packet identification comprises an identification of a first data packet sent by the terminal device to the second access network device.

29. A communication apparatus, comprising: a processing module and a sending module;
wherein the processing module is configured to perform handover of a relay device and a terminal device from a first access network device to a second access network device, and send a data packet to the relay device through the sending module, wherein the data packet comprises first identification information, and the first identification information is used to identify sending the data packet to the second access network device.

30. A communication apparatus, comprising: a processing module and a sending module;
wherein the processing module is configured to send a third message to a relay device through the sending module, wherein the third message is used to indicate a boundary data packet identification, the boundary data packet identification comprising an identification of a last data packet sent by the terminal device to a first access network device, or the boundary data packet identification comprising an identification of a first data packet sent by the terminal device to a second access network device.

31. A relay device, comprising:
a memory for storing program instructions; and
a processor for calling and executing the program instructions in the memory to execute steps of the method according to any one of claims 1-10 or any one of claims 11-15.

32. A terminal device, comprising:
a memory for storing program instructions; and
a processor for calling and executing the program instructions in the memory to execute steps of the method according to any one of claims 16-25 or claim 26.

33. A readable storage medium, wherein a computer program is stored in the readable storage medium, and the computer program is used to execute the method according to any one of claims 1-10, any one of claims 11-15, any one of claims 16-25 or claim 26.
